# EUROPEAN PATENT APPLICATION

(11) **EP 4 531 237 A2**
(43) Date of publication of application: **02.04.2025**
(21) Application number: 24202787.8
(22) Date of filing: 26.09.2024
(51) Int. Cl.: H02J 7/00, H02J 7/34, H02J 9/06

(54) **BATTERY SWAPPING CABINET, AC DISCHARGING CABINET, AND CHARGING STATION SYSTEM**

(30) Priority: 28.09.2023 US 202363586045 P
(71) Applicant: Delta Electronics, Inc., Taoyuan City 320023 (TW)
(72) Inventor: WU, Chung-Hsien, 320023 Taoyuan City (TW); WANG, Wei-Pin, 320023 Taoyuan City (TW); WEI, Chung-Hwa, 320023 Taoyuan City (TW); LAI, Cheng-Kai, 320023 Taoyuan City (TW)
(74) Representative: 2K Patentanwälte Blasberg Kewitz & Reichel

(57) **Abstract**

A battery swapping cabinet (1, 1A-1C) includes an AC-to-DC converter (11), a plurality of charging/discharging DC converters (13-1 to 13-N), a plurality of batteries (14-1 to 14-N), a first auxiliary DC converter (15), and a main board (16). The AC-to-DC converter (11) converts an AC power supply into a DC bus voltage (V_{BUS}). The charging/discharging DC converters (13-1 to 13-N) respectively receive the DC bus voltage (V_{BUS}) and convert the DC bus voltage (V_{BUS}) into a plurality of DC voltages (V1-V_{N}). The plurality of batteries (14-1 to 14-N) receive the plurality of DC voltages (V1-V_{N}). The first auxiliary DC converter (15) receives the DC bus voltage (V_{BUS}) and converts the DC bus voltage (V_{BUS}) into a first state voltage (Vsi). The main board (16) receives the first state voltage (Vsi) and a second state voltage (V_{S2}). According to a state of the AC power supply, the main board (16) provides the first state voltage (Vsi) or the second state voltage (V_{S2}) to the plurality of batteries (14-1 to 14-N) to maintain the power required for the uninterrupted operation of the plurality of batteries (14-1 to 14-N).

## Description

### BACKGROUND

### Technical Field

The present disclosure relates to a battery swapping cabinet, an AC discharging cabinet, and a charging station system, and more particularly to a battery swapping cabinet, an AC discharging cabinet, and a charging station system with multiple power supply operation modes.

### Description of Related Art

The statements in this section merely provide background information related to the present disclosure and do not necessarily constitute prior art.

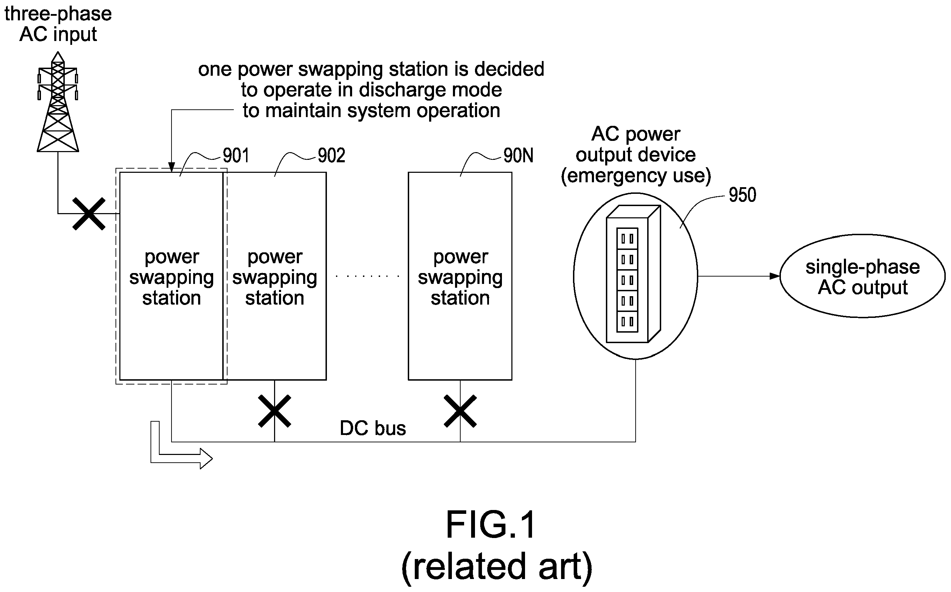

Please refer to FIG. 1, which shows a system block diagram of a related-art charging station system. The charging station system includes a plurality of power swapping stations 901-90N and an AC power output device 950. In particular, the plurality of power swapping stations 901-90N are connected in parallel with each other, and each power swapping station 901-90N has a plurality of rechargeable batteries (not shown), and any one of them can be swapped out for use. In particular, the rechargeable batteries may not only be used to charge electric vehicles (EVs), but also be used to supply power to general loads through their discharge. One operational situation is: when the three-phase AC input (such as the grid) fails and cannot supply power to the charging station system, the system will continue to work using the built-in battery of the power swapping stations 901-90N through the uninterruptible power supply (UPS) mode to ensure sustainable operation of the system. In this condition, the AC power output device 950 may be used as an emergency power supply for other equipment. Another operational situation is: when the three-phase AC input (for example, the power grid) normally supplies power, the owners of power stations hope that the AC power output device 950 of the charging station system will output AC power to supply power other equipment so that the power supply operation of the power grid can be shared. Therefore, no matter it is the first or second operational situation mentioned above, the rechargeable battery plays the role of discharging power supply, and therefore the charging station system will determine one of the power swapping stations 901-90N to keep the system working and use it as a discharge mode.

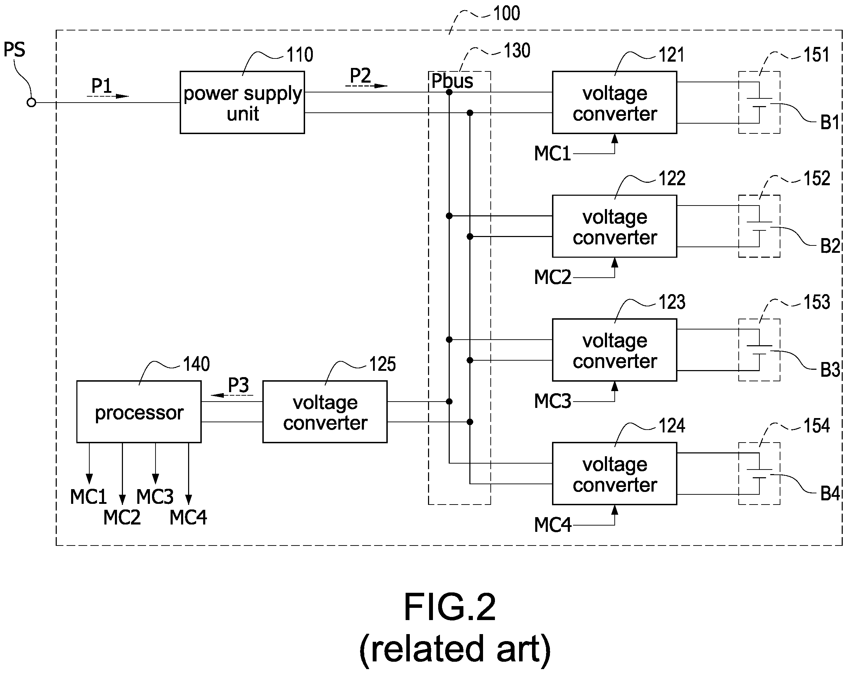

Please refer to FIG. 2, which shows a functional block diagram of the related-art charging station system. Under the current system configuration in FIG. 2, users can replace the portable batteries used in electric vehicles (such as electric motorcycles) at the power swapping station of a specific charging station system to charge the low-power portable battery of the device in the power swapping station, and the high-power portable battery can be taken out from the power swapping station for replacement. However, the current power swapping station of the charging station system has the following shortcomings: (1) an uninterruptible power system (UPS) with idle batteries needs to be installed so that when the mains power is interrupted, the charging station system can still maintain the battery replacement service of the power swapping station; (2) the portable batteries are charged only in one direction; (3) when the portable battery is fully charged, the system enters the idle state.

As shown in FIG. 2, when the external power supply (such as the grid power supply PS) is converted by the power supply unit 110, it can be built on the DC bus Pbus, for example, but not limited to, a bus voltage of 400 volts (or 388 volts). The bus voltage is then stepped down and converted into a battery voltage of, for example but not limited to, 48 volts through each voltage converter 121-124, and the corresponding battery B1-B4 is charged for use. Under normal operation, one of batteries B1-B4 (for example, battery B1) is used as an uninterruptible power supply UPS. That is, once the mains power is cut off or fails, the battery B1 can be discharged and the electric energy can be used as the bus voltage to maintain the normal operation of the system. In this condition, the voltage provided by the battery B1 is converted to, for example but not limited to, a voltage of 355 volts on the DC bus Pbus through the corresponding voltage converter 121. In other words, when the system detects that the bus voltage is 355 volts, it can know that the current state is that the mains power is cut off or fails, and one of the batteries B 1-B4 performs uninterruptible power operation. On the contrary, if the system detects that the bus voltage is 400 volts (or 388 volts), it can know that the current state is the normal power supply state of the mains.

However, in such a determination mechanism, it is necessary to detect the voltage difference between the high-voltage bus voltage, that is, 355 volts or 400 volts (or 388 volts). In addition to considering the withstand voltage tolerance of selected components, devices, and circuit designs, the high voltage and generated high current may cause danger to personnel and need to be carefully guarded against.

Therefore, how to design a battery swapping cabinet, an AC discharging cabinet, and a charging station system to solve the problems and technical bottlenecks in the existing technology has become a critical topic in this field.

### SUMMARY

An objective of the present disclosure is to provide a battery swapping cabinet. The battery swapping cabinet includes an AC-to-DC converter, a plurality of charging/discharging DC converters, a plurality of batteries, a first auxiliary DC converter, and a main board. The AC-to-DC converter receives a three-phase AC power supply, and converts the three-phase AC power supply into a DC bus voltage, wherein the DC bus voltage is built on a DC bus. The plurality of charging/discharging DC converters respectively receive the DC bus voltage, and convert the DC bus voltage into a plurality of DC voltages. The plurality of batteries is correspondingly connected to the plurality of charging/discharging DC converters, and receive the plurality of DC voltages. The first auxiliary DC converter receives the DC bus voltage, and converts the DC bus voltage into a first state voltage. The main board receives the first state voltage and a second state voltage, wherein the first state voltage is greater than the second state voltage. According to a state of the three-phase AC power supply, the main board provides the first state voltage or the second state voltage to the plurality of batteries to maintain the power required for uninterrupted operation of the plurality of batteries.

In one embodiment, the main board internally includes a switching contact. The switching contact receives the first state voltage and the second state voltage. When the three-phase AC power supply is disabled, the second state voltage is provided from the main board to the plurality of batteries through the switching contact to maintain the power required for uninterrupted operation of the plurality of batteries; when the three-phase AC power supply is enabled, the first state voltage is provided from the main board to the plurality of batteries through the switching contact to maintain the power required for uninterrupted operation of the plurality of batteries.

In one embodiment, the battery swapping cabinet further includes a second auxiliary DC converter. The second auxiliary DC converter is coupled to the main board, and the second auxiliary DC converter receives one of the pluralities of DC voltages, and converts the DC voltage into the second state voltage.

In one embodiment, the battery swapping cabinet further includes a plurality of diodes. Each diode includes an anode and a cathode. The anodes of the plurality of diodes are correspondingly connected to a plurality of charging/discharging paths between the plurality of charging/discharging DC converters and the plurality of batteries; the cathodes of the plurality of diodes are jointly connected, and connected to the second auxiliary DC converter.

In one embodiment, the battery swapping cabinet further includes a DC converter and an air conditioning unit. The DC converter receives the DC bus voltage, and converts the DC bus voltage into a supplying voltage. The air conditioning unit receives the supplying voltage, and the air conditioning unit is supplied power by the supplying voltage to provide heat dissipation for the plurality of batteries.

In one embodiment, any one of the plurality of batteries is swapped out.

In one embodiment, any one of the pluralities of charging/discharging DC converters is a bidirectional converter.

In one embodiment, the battery swapping cabinet provides an auxiliary power, and a voltage of the auxiliary power is between an upper limit voltage and a lower limit voltage. The first state voltage is not higher than the upper limit voltage, and the second state voltage is not lower than the lower limit voltage.

In one embodiment, the battery swapping cabinet further includes a plurality of diodes. Each diode includes an anode and a cathode. The anodes of the plurality of diodes are correspondingly connected to a plurality of charging/discharging paths between the plurality of charging/discharging DC converters and the plurality of batteries; the cathodes of the plurality of diodes are jointly connected, and connected to the first auxiliary DC converter.

In one embodiment, the first auxiliary DC converter further receives any one of the pluralities of DC voltages, and converts the DC voltage into the second state voltage.

In one embodiment, when the three-phase AC power supply is disabled, the first auxiliary DC converter provides the second state voltage so that the second state voltage is provided from the main board to the plurality of batteries; when the three-phase AC power supply is enabled, the first auxiliary DC converter provides the first state voltage so that the first state voltage is provided from the main board to the plurality of batteries.

In one embodiment, the battery swapping cabinet further includes an uninterruptible power supply unit. The uninterruptible power supply unit generates the second state voltage. When the three-phase AC power supply is disabled, the uninterruptible power supply unit provides the second state voltage so that the second state voltage is provided from the main board to the plurality of batteries; when the three-phase AC power supply is enabled, the first auxiliary DC converter provides the first state voltage so that the first state voltage is provided from the main board to the plurality of batteries.

In one embodiment, the uninterruptible power supply unit further receives the first state voltage, and the uninterruptible power supply unit is supplied power by the first state voltage.

Another objective of the present disclosure is to provide an AC discharging cabinet. The AC discharging cabinet includes a second DC bus, a third auxiliary DC converter, a second main board, and a DC-to-AC converter. The second DC bus provides a DC bus voltage. The third auxiliary DC converter receives the DC bus voltage, and converts the DC bus voltage into a working voltage. The second main board receives the working voltage. The DC-to-AC converter receives the DC bus voltage, and converts the DC bus voltage into an AC conversion voltage.

In one embodiment, the AC discharging cabinet further includes an input switch. The input switch receives a control signal provided by the second main board, and is controlled to be turned on and turned off by the control signal.

In one embodiment, the input switch receives a single-phase AC power supply. When the AC conversion voltage is used as an output voltage of the AC discharging cabinet, the input switch is turned off by the control signal provided by the second main board; when AC conversion voltage is not used as the output voltage of the AC discharging cabinet, the input switch is turned on by the control signal provided by the second main board so that the single-phase AC power supply is used as the output voltage of the AC discharging cabinet.

Further another objective of the present disclosure is to provide a charging station system. The charging station system includes a battery swapping cabinet and an AC discharging cabinet. The battery swapping cabinet further includes a connection switch, and the connection switch is connected between the DC bus and the second DC bus. The main board provides a connection control signal to turn on and turn off the connection switch.

In one embodiment, when the connection switch is turned on, the DC bus voltage on the DC bus is provided to the second DC bus through the connection switch so that the AC conversion voltage is used as an output voltage of the AC discharging cabinet.

In one embodiment, when the connection switch is turned off, the DC bus voltage on the DC bus is not provided to the second DC bus through the connection switch so that a single-phase AC power supply is used as an output voltage of the AC discharging cabinet.

Accordingly, the battery swapping cabinet, the AC discharging cabinet, and the charging station system of the present disclosure can provide multiple power supply operation modes.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a system block diagram of a related-art charging station system.
FIG. 2 is a functional block diagram of the related-art charging station system.
FIG. 3 is a block diagram of a battery swapping cabinet according to a first embodiment of the present disclosure.
FIG. 4 is a block diagram of the battery swapping cabinet according to a second embodiment of the present disclosure.
FIG. 5 is a block diagram of the battery swapping cabinet according to a third embodiment of the present disclosure.
FIG. 6 is a block diagram of a main board having a switching contact according to the present disclosure.
FIG. 7 is a block diagram of an AC discharging cabinet according to the present disclosure.
FIG. 8 is a block diagram of a charging station system according to the present disclosure.
FIG. 9 is a flowchart of a power supply management method according to the present disclosure.
FIG. 10 is a schematic diagram of operating the charging station system in a first power supply mode according to the present disclosure.
FIG. 11 is a schematic diagram of operating the charging station system in a second power supply mode according to the present disclosure.
FIG. 12 is a schematic diagram of operating the charging station system in a third power supply mode according to the present disclosure.
FIG. 13 is a schematic diagram of operating the charging station system in a fourth power supply mode according to the present disclosure.
FIG. 14 is a schematic diagram of operating the charging station system in a fifth power supply mode according to the present disclosure.
FIG. 15 is a schematic diagram of operating the charging station system in a sixth power supply mode according to the present disclosure.
FIG. 16 is a block diagram of the charging station system having a human-machine interface according to a first embodiment of the present disclosure.
FIG. 17 is a block diagram of the charging station system having the human-machine interface according to a second embodiment of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

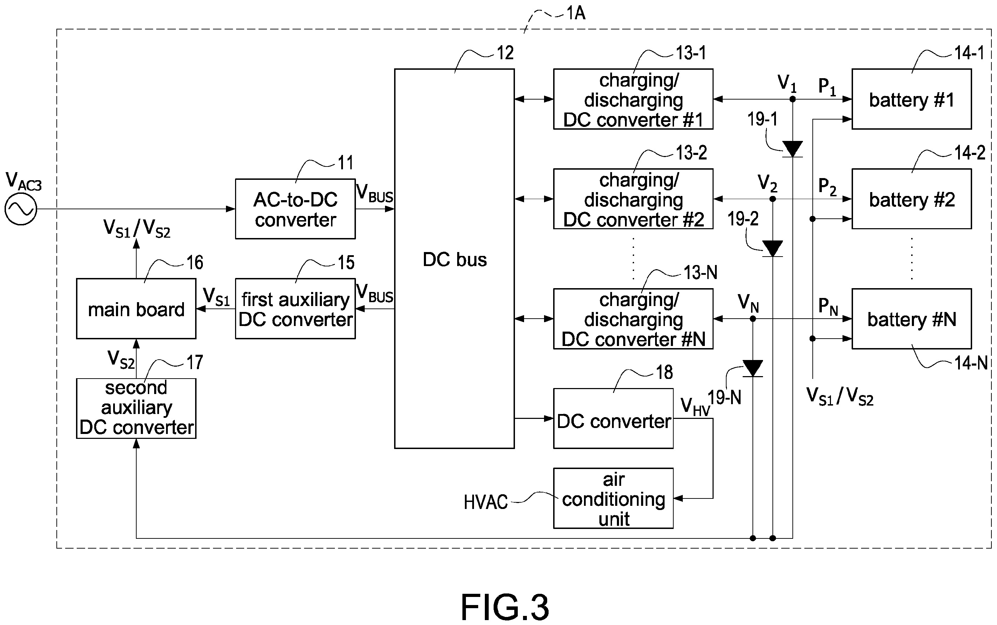

Please refer to FIG. 3, which shows a block diagram of a battery swapping cabinet according to a first embodiment of the present disclosure. The battery swapping cabinet 1A includes an AC-to-DC converter 11, a plurality of charging/discharging DC converters 13-1, 13-2, ..., 13-N, a plurality of batteries 14-1, 14-2, ..., 14-N, a first auxiliary DC converter 15, and a main board 16. The AC-to-DC converter 11 receives a three-phase AC power supply V_{AC3}, and converts the three-phase AC power supply V_{AC3} into a DC bus voltage V_{BUS}, wherein the DC bus voltage V_{BUS} is built on a DC bus 12.

The plurality of charging/discharging DC converters 13-1, 13-2, ..., 13-N respectively receive the DC bus voltage V_{BUS}, and convert the DC bus voltage V_{BUS} into a plurality of DC voltages Vi, V₂, ..., V_{N}. Specifically, the plurality of charging/discharging DC converters 13-1, 13-2, ..., 13-N include a first charging/discharging DC converter 13-1, a second charging/discharging DC converter 13-2, ..., and a Nth charging/discharging DC converter 13-N. Incidentally, any one of the pluralities of charging/discharging DC converters 13-1, 13-2, ..., 13-N is a bidirectional converter. Therefore, for the power flow from the DC bus 12 to the plurality of batteries 14-1, 14-2, ..., 14-N, the first charging/discharging DC converter 13-1 receives the DC bus voltage V_{BUS}, and converts the DC bus voltage V_{BUS} into a first DC voltage Vi, the second charging/discharging DC converter 13-2 receives the DC bus voltage V_{BUS}, and converts the DC bus voltage V_{BUS} into a second DC voltage V₂, ..., and the Nth charging/discharging DC converter 13-N receives the DC bus voltage V_{BUS}, and converts the DC bus voltage V_{BUS} into a Nth DC voltage V_{N}.

The plurality of batteries 14-1, 14-2, ..., 14-N are correspondingly connected to the plurality of charging/discharging DC converters 13-1, 13-2, ..., 13-N, and receive the plurality of DC voltages Vi, V₂, ..., V_{N}. Specifically, the plurality of 14-1, 14-2, ..., 14-N include a first battery 14-1, a second battery 14-2, ..., and a Nth battery 14-N. Incidentally, any one of the plurality of batteries 14-1, 14-2, ..., 14-N is swapped out. The first battery 14-1 is connected to the first charging/discharging DC converter 13-1, the second battery 14-2 is connected to the second charging/discharging DC converter 13-2, ..., and the Nth battery 14-N is connected to the Nth charging/discharging DC converter 13-N. Incidentally, the above-mentioned term "battery" is for the purpose of concise description. However, those with ordinary knowledge in the art can understand that the so-called "battery" is the abbreviation of a battery module. The battery module includes battery cells and related electrical and mechanical components and devices. Specifically, electrical components and devices such as charging and discharging circuits, battery management units, sensors, balancing circuits, circuit breakers, etc., and mechanical components and devices such as module casings, heat dissipation devices, brackets or fixtures, plug-in handles, etc.

As mentioned above, any one of the plurality of charging/discharging DC converters 13-1, 13-2, ..., 13-N is a bidirectional converter, for the power flow from the DC bus 12 to the plurality of batteries 14-1, 14-2, ..., 14-N, the power outputted by the first battery 14-1 is converted into a power fed back to the DC bus 12 through the first charging/discharging DC converter 13-1, the power outputted by the second battery 14-2 is converted into a power fed back to the DC bus 12 through the second charging/discharging DC converter 13-2, ..., and the power outputted by the Nth battery 14-N is converted into a power fed back to the DC bus 12 through the Nth charging/discharging DC converter 13-N.

The first auxiliary DC converter 15 receives the DC bus voltage V_{BUS}, and converts the DC bus voltage V_{BUS} into a first state voltage Vsi. In one embodiment, the first state voltage Vsi is 12.4 volts, but this does not limit the present disclosure. The main board 16 receives the first state voltage Vsi and a second state voltage V_{S2}, wherein the first state voltage Vsi is greater than the second state voltage V_{S2}. As mentioned above, the first state voltage Vsi is 12.4 volts, and therefore the second state voltage V_{S2} is 11.75 volts, but this does not limit the present disclosure. However, the voltage values of the first state voltage Vsi and the second state voltage V_{S2} are disclosed for convenience of explanation only. Incidentally, the voltages of the first state voltage Vsi and the second state voltage V_{S2} may be a voltage range rather than a single voltage value, but still comply with the principle that the first state voltage Vsi is greater than the second state voltage V_{S2}. More specifically, the auxiliary power provided by the battery swapping cabinet is used to provide an auxiliary power required for basic operation of the system in the battery swapping cabinet. The basic operation of the system includes the auxiliary power required for the operation of peripheral devices such as system control circuits, displays, or operating interfaces, and a voltage of the power outputted by the auxiliary power is between an upper limit voltage and a lower limit voltage, which can provide the power required for the basic operation of the system. In particular, the first state voltage Vsi is not higher than the upper limit voltage, and the second state voltage V_{S2} is not lower than the lower limit voltage. For example, it is assumed that the upper limit voltage and the lower limit voltage of the auxiliary power are 13 volts and 11 volts respectively, and therefore the first state voltage Vsi and the second state voltage V_{S2} may be 12.4 volts and 11.75 volts respectively, or the first state voltage Vsi and the second state voltage V_{S2} may be 12.8 to 12.3 volts and 11.9 to 11.4 volts respectively.

According to a state of the three-phase AC power supply V_{AC3}, the main board 16 provides the first state voltage Vsi or the second state voltage V_{S2} to the plurality of batteries 14-1, 14-2, ..., 14-N to maintain the power required for uninterrupted operation of the plurality of batteries 14-1, 14-2, ..., 14-N. Incidentally, the so-called "uninterrupted operation" refers to the power supply required to maintain the normal operation of the plurality of batteries 14-1, 14-2, ..., 14-N, excluding the power supply for charging the plurality of batteries 14-1, 14-2, ..., 14-N.

Specifically, when the three-phase AC power supply V_{AC3} is disabled (such as power failure, interruption of power supply or the like), the second state voltage V_{S2} is provided from the main board 16 to the plurality of batteries 14-1, 14-2, ..., 14-N to maintain the power required for uninterrupted operation of the plurality of batteries 14-1, 14-2, ..., 14-N. On the contrary, when the three-phase AC power supply V_{AC3} is enabled, the first state voltage Vsi is provided from the main board 16 to the plurality of batteries 14-1, 14-2, ..., 14-N to maintain the power required for uninterrupted operation of the plurality of batteries 14-1, 14-2, ..., 14-N.

As shown in FIG. 3, the battery swapping cabinet 1A further includes a second auxiliary DC converter 17. The second auxiliary DC converter 17 receives one of the pluralities of DC voltages Vi, V₂, ..., V_{N}, and converts the DC voltage Vi, V₂, ..., V_{N} into the second state voltage V_{S2}. Specifically, the second auxiliary DC converter 17 receives the first DC voltage Vi, and converts the first DC voltage Vi into the second state voltage V_{S2}, the second auxiliary DC converter 17 receives the second DC voltage V₂, and converts the second DC voltage V₂ into the second state voltage V_{S2}, ..., and the second auxiliary DC converter 17 receives the Nth DC voltage V_{N}, and converts the Nth DC voltage V_{N} into the second state voltage V_{S2}.

As shown in FIG. 3, the battery swapping cabinet 1A further includes a plurality of diodes 19-1, 19-2, ..., 19-N. Each diode 19-1, 19-2, ..., 19-N includes an anode and a cathode. The anodes of the plurality of diodes 19-1, 19-2, ..., 19-N are correspondingly connected to a plurality of charging/discharging paths P₁, P₂, ..., P_{N} between the plurality of charging/discharging DC converters 13-1, 13-2, ..., 13-N and the plurality of batteries 14-1, 14-2, ..., 14-N. The cathodes of the plurality of diodes 19-1, 19-2, ..., 19-N are jointly connected, and connected to the second auxiliary DC converter 17. Specifically, the plurality of diodes 19-1, 19-2, ..., 19-N include a first diode 19-1, a second diode 19-2, ..., and a Nth diode 19-N. The anode of the first diode 19-1 is connected to a first charging/discharging path P₁ between the first charging/discharging DC converter 13-1 and the first battery 14-1, the anode of the second diode 19-2 is connected to a second charging/discharging path P₂ between the second charging/discharging DC converter 13-2 and the second battery 14-2, ..., and the anode of the Nth diode 19-N is connected to a Nth charging/discharging path P_{N} between the Nth charging/discharging DC converter 13-N and the Nth battery 14-N. The cathode of the first diode 19-1, the cathode of the second diode 19-2, ..., and the cathode of the Nth diode 19-N are jointly connected, and connected to the second auxiliary DC converter 17.

As shown in FIG. 3, the battery swapping cabinet 1A further includes a DC converter 18 and an air conditioning unit HVAC. The DC converter 18 receives the DC bus voltage V_{BUS}, and converts the DC bus voltage V_{BUS} into a supplying voltage V_{HV}. The air conditioning unit HVAC receives the supplying voltage V_{HV}, and the air conditioning unit HVAC is supplied power by the supplying voltage V_{HV} to provide heat dissipation for the plurality of batteries 14-1, 14-2, ..., 14-N.

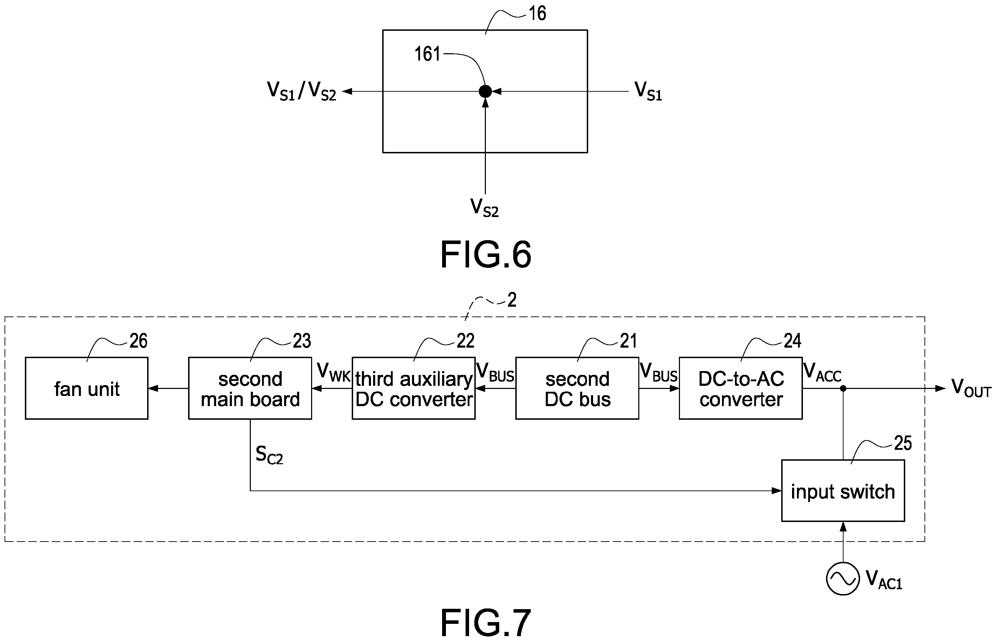

Please refer to FIG. 6, which shows a block diagram of a main board having a switching contact according to the present disclosure. The man board 16 internally includes a switching contact 161, but this does not limit the present disclosure, that is, the switching contact may be a bus bar, and its main purpose is to achieve power (voltage) switching and connection without time difference when switching between the first state voltage Vsi and the second state voltage V_{S2} to ensure the stability of system operation. The switching contact 161 receives the first state voltage Vsi and the second state voltage V_{S2}. When the three-phase AC power supply V_{AC3} is disabled, the second state voltage V_{S2} is provided from the main board 16 to the plurality of batteries 14-1, 14-2, ..., 14-N through the switching contact 161. On the contrary, when the three-phase AC power supply V_{AC3} is enabled, since the first state voltage Vsi is greater than the second state voltage V_{S2} so that the first state voltage Vsi is provided from the main board 16 to the plurality of batteries 14-1, 14-2, ..., 14-N through the switching contact 161.

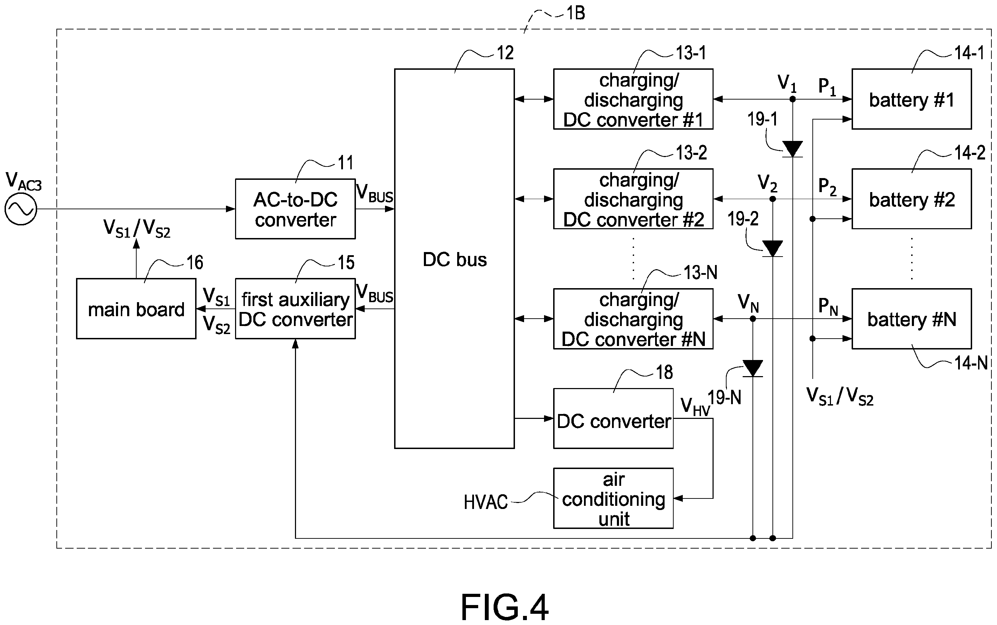

Please refer to FIG. 4, which shows a block diagram of the battery swapping cabinet according to a second embodiment of the present disclosure. According to the description of the first embodiment of the battery swapping cabinet of the present disclosure shown in FIG. 3, the similarities will not be described again. Compared with the first embodiment shown in FIG. 3, the second embodiment shown in FIG. 4 does not use the second auxiliary DC converter 17. Therefore, the anodes of the plurality of diodes 19-1, 19-2, ..., 19-N are correspondingly connected to a plurality of charging/discharging paths P₁, P₂, ..., P_{N} between the plurality of charging/discharging DC converters 13-1, 13-2, ..., 13-N and the plurality of batteries 14-1, 14-2, ..., 14-N, and the cathodes of the plurality of diodes 19-1, 19-2, ..., 19-N are jointly connected, and connected to the first auxiliary DC converter 15. Moreover, the first auxiliary DC converter 15 further receives any one of the DC voltages Vi, V₂, ..., V_{N}, and converts the DC voltages Vi, V₂, ..., V_{N} into the second state voltage V_{S2}.

When the three-phase AC power supply V_{AC3} is disabled, the first auxiliary DC converter 15 provides the second state voltage V_{S2} so that the second state voltage V_{S2} is provided from the main board 16 to the plurality of batteries 14-1, 14-2, ..., 14-N. On the contrary, when the three-phase AC power supply V_{AC3} is enabled, the first auxiliary DC converter 15 provides the first state voltage Vsi so that the first state voltage Vsi is provided from the main board 16 to the plurality of batteries 14-1, 14-2, ..., 14-N.

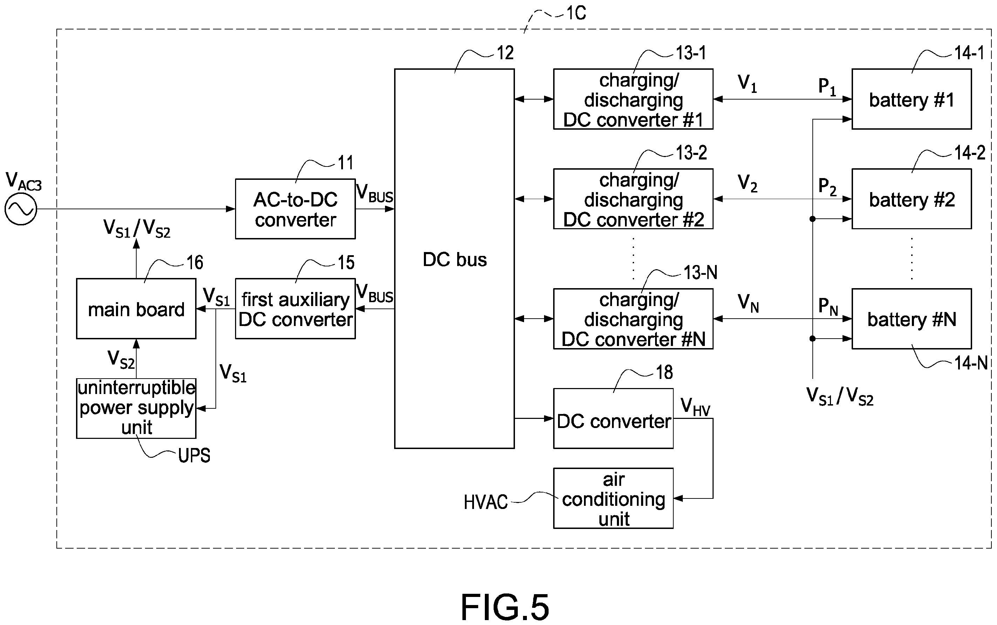

Please refer to FIG. 5, which shows a block diagram of the battery swapping cabinet according to a third embodiment of the present disclosure. According to the description of the first embodiment and the second embodiment of the battery swapping cabinet of the present disclosure shown in FIG. 3 and FIG. 4 respectively, the similarities will not be described again. Compared with the first embodiment shown in FIG. 3 and the second embodiment shown in FIG. 4, the third embodiment shown in FIG. 5 does not use the plurality of diodes 19-1, 19-2, ..., 19-N. In addition, compared with the first embodiment shown in FIG. 3 and the second embodiment shown in FIG. 4, the third embodiment shown in FIG. 5 further includes an uninterruptible power supply unit UPS.

The uninterruptible power supply unit UPS generates the second state voltage V_{S2}. When the three-phase AC power supply V_{AC3} is disabled, the uninterruptible power supply unit UPS provides the second state voltage V_{S2} so that the second state voltage V_{S2} is provided from the main board 16 to the plurality of batteries 14-1, 14-2, ..., 14-N. On the contrary, when the three-phase AC power supply V_{AC3} is enabled, the first auxiliary DC converter 15 provide the first state voltage Vsi so that the first state voltage Vsi is provided from the main board 16 to the plurality of batteries 14-1, 14-2, ..., 14-N. In addition, the uninterruptible power supply unit UPS further receives the first state voltage Vsi, and the uninterruptible power supply unit UPS is supplied power by the first state voltage Vsi.

Please refer to FIG. 7, which shows a block diagram of an AC discharging cabinet according to the present disclosure. The AC discharging cabinet 2 includes a second DC bus 21, a third auxiliary DC converter 22, a second main board 23, and a DC-to-AC converter 24. The second DC bus 21 provides the DC bus voltage V_{BUS}. The third auxiliary DC converter 22 receives the DC bus voltage V_{BUS}, and converts the DC bus voltage V_{BUS} into a working voltage V_{WK}. The second main board 23 receives the working voltage V_{WK}. The DC-to-AC converter 24 receives the DC bus voltage V_{BUS}, and converts the DC bus voltage V_{BUS} into an AC conversion voltage V_{ACC}.

The AC discharging cabinet 2 further includes an input switch 25. The input switch 25 receives a control signal S_{C2} provided by the second main board 23, and the input switch 25 is controlled to be turned on and turned off by the control signal S_{C2}. The input switch 25 receives a single-phase AC power supply V_{AC1}. When the AC conversion voltage V_{ACC} is used as an output voltage V_{OUT} of the AC discharging cabinet 2, the input switch 25 is turned off by the control signal S_{C2} provided by the second main board 23. On the contrary, wherein when the AC conversion voltage V_{ACC} is not used as the output voltage V_{OUT} of the AC discharging cabinet 2, the input switch 25 is turned on by the control signal S_{C2} provided by the second main board 23 so that the single-phase AC power supply V_{AC1} is used as the output voltage V_{OUT} of the AC discharging cabinet 2.

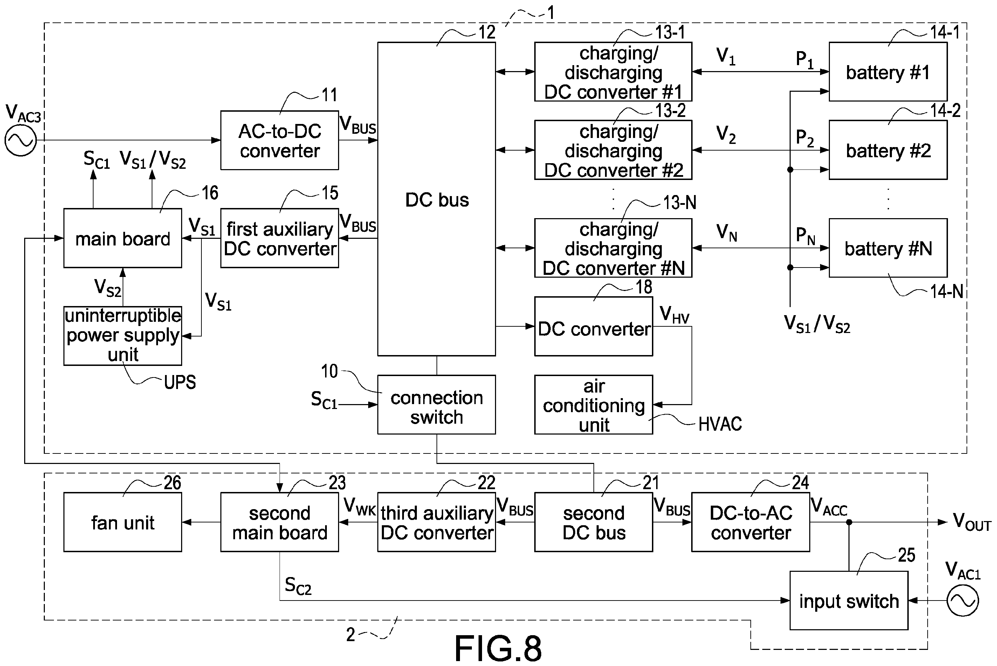

Please refer to FIG. 8, which shows a block diagram of a charging station system according to the present disclosure. The charging station system includes the battery swapping cabinet 1A, 1B, 1C and the AC discharging cabinet 2. The battery swapping cabinet 1A, 1B, 1C is connected to the AC discharging cabinet 2. Incidentally, since the battery swapping cabinet 1A, 1B, 1C has different embodiments, the charging station system of the present disclosure has different embodiments when used with the AC discharging cabinet 2. Therefore, the present disclosure is not limited to the cooperative use of the battery swapping cabinet 1C and the AC discharging cabinet 2 shown in FIG. 8. In other words, the charging station system of the present disclosure may also include the cooperative use of the battery swapping cabinet 1A and the AC discharging cabinet 2, and the cooperative use of the battery swapping cabinet 1B and the AC discharging cabinet 2.

As shown in FIG. 8, the battery swapping cabinet 1C further includes a connection switch 10. Specifically, the connection switch 10 is connected between the DC bus 12 and the second DC bus 21 for connecting the battery swapping cabinet 1C and the AC discharging cabinet 2, that is, when the connection switch 10 is turned on, the DC bus voltage V_{BUS} of the battery swapping cabinet 1C is provided to the AC discharging cabinet 2 through the DC bus 12 and the second DC bus 21. In particular, the turning on and turning off of the connection switch 10 is controlled by the main board 16. Specifically, the main board 16 provides a connection control signal Sci to turn on and turn off the connection switch 10.

Specifically, when the connection switch 10 is turned on, the DC bus voltage V_{BUS} on the DC bus 12 is provided to the second DC bus 21 through the connection switch 10 so that the AC conversion voltage V_{ACC} is used as the output voltage V_{OUT} of the AC discharging cabinet 2. In addition, when the connection switch 10 is turned off, the DC bus voltage V_{BUS} on the DC bus 12 is not provided to the second DC bus 21 through the connection switch 10 so that the single-phase AC power supply V_{AC1} is used as the output voltage V_{OUT} of the AC discharging cabinet 2.

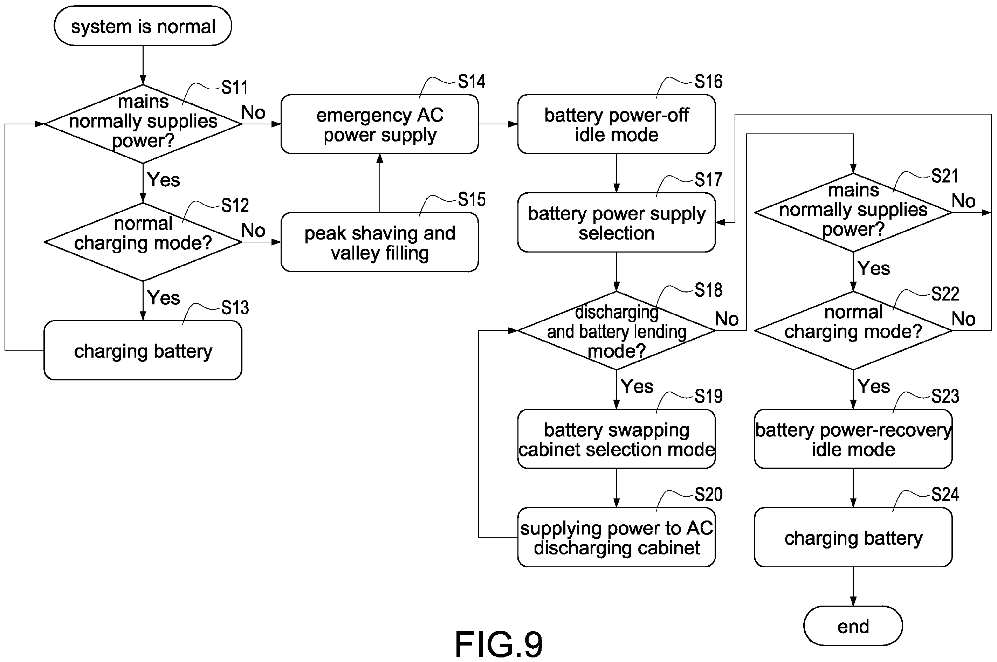

Please refer to FIG. 9, which shows a flowchart of a power supply management method according to the present disclosure. The power supply management method may be applied to the implementation of different battery swapping cabinets in the charging station system of the present disclosure, such as the first embodiment shown in FIG. 3, the second embodiment shown in FIG. 4, and the third embodiment shown in FIG. 5. When the system is normal, the system determines whether the mains normally operate (step S11). If the mains normally operate, the system determines whether the batteries 14-1, 14-2, ..., 14-N are in a normal charging mode (step S12). If the batteries 14-1, 14-2, ..., 14-N are in the normal charging mode, the system charges the batteries 14-1, 14-2, ..., 14-N (step S13). Incidentally, in step S12, the confirmation conditions are: (a) whether there is any abnormality in the bidirectional charging/discharging DC converters 13-1, 13-2, ..., 13-N; (b) whether there is any abnormality in the batteries 14-1, 14-2, ..., 14-N; (c) whether the system enters the normal charging mode. If no abnormality occurs in the confirmation conditions (a) and (b), and the confirmation condition (c) is "yes", the determination result in step S12 is "yes". If one of the confirmation conditions (a) and (b) is abnormal, the system evaluates that some batteries 14-1, 14-2, ..., 14-N can be charged, and the confirmation condition (c) is "yes", the determination result in step S12 is "yes". If no abnormality occurs in the confirmation conditions (a) and (b), and the confirmation condition (c) is "no", the determination result in step S12 is "no". If one of the confirmation conditions (a) and (b) is abnormal, the system evaluates that some batteries 14-1, 14-2, ..., 14-N can be charged, and the confirmation condition (c) is "no", the determination result in step S12 is "no".

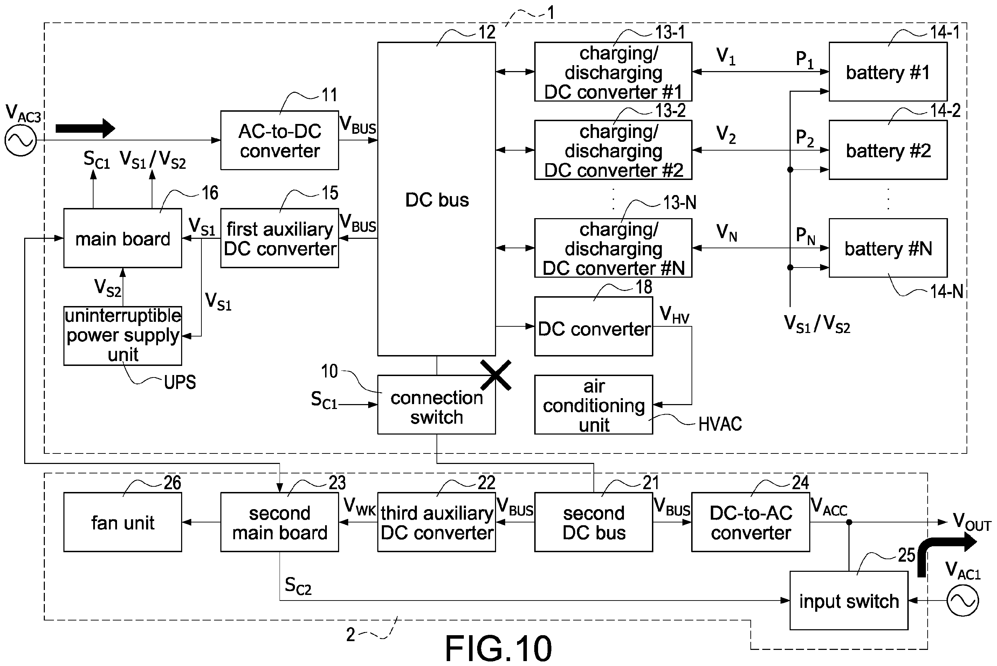

Regarding the battery charging in step S13, please refer to FIG. 10, which shows a schematic diagram of operating the charging station system in a first power supply mode according to the present disclosure. In the first power supply mode, when the mains V_{AC3} (i.e., the three-phase AC power supply) normally supplies power, the AC-to-DC converter 11 converts the mains V_{AC3} into a DC voltage (for example, 388 volts, but this does not limit the present disclosure), that is, the DC bus voltage V_{BUS}, and the DC bus voltage V_{BUS} is built on the DC bus 12. Furthermore, the DC bus voltage V_{BUS} is provides to the first charging/discharging DC converter 13-1, the second charging/discharging DC converter 13-2, ..., and the Nth charging/discharging DC converter 13-N, and the DC bus voltage V_{BUS} is respectively converted by the first charging/discharging DC converter 13-1, the second charging/discharging DC converter 13-2, ..., and the Nth charging/discharging DC converter 13-N into the first DC voltage Vi, the second DC voltage V₂, ..., and the Nth DC voltage V_{N} so as to correspondingly charge the first battery 14-1, the second battery 14-2, ..., and the Nth battery 14-N.

Furthermore, the first auxiliary DC converter 15 receives the DC bus voltage V_{BUS}, and converts the DC bus voltage V_{BUS} into the first state voltage Vsi. In one embodiment, the first state voltage Vsi is 12.4 volts, but this does not limit the present disclosure. In particular, the first state voltage Vsi may provide to the uninterruptible power supply unit UPS and the main board 16 to maintain the power required for normal operation of the system. Therefore, the uninterruptible power supply unit UPS provides the second state voltage V_{S2} to the main board 16 for controlling and monitoring the plurality of batteries 14-1, 14-2, ..., 14-N. In one embodiment, the second state voltage V_{S2} is 11.75 volts, but this does not limit the present disclosure.

In the normal charging mode, the connection control signal Sci provided by the main board 16 turns off the connection switch 10. Therefore, the battery swapping cabinet 1 and the AC discharging cabinet 2 are disconnected so that DC bus voltage V_{BUS} cannot be provided to the second DC bus 21 of the AC discharging cabinet 2 through the connection switch 10. In this condition, the control signal S_{C2} provided by the second main board 23 turns on the input switch 25 so that the single-phase AC power supply V_{AC1} is used as the output voltage V_{OUT} of the AC discharging cabinet 2.

After step S13, return to step S11 to determine whether the mains normally supply power, and perform subsequent related steps again. Incidentally, in step S11, the confirmation conditions are: (a) the mains provide to the AC-to-DC converter 11, and whether there is any abnormality in the bidirectional charging/discharging DC converters 13-1, 13-2, ..., 13-N; (b) whether there is any abnormality in the first auxiliary DC converter 15. If no abnormality occurs in the confirmation conditions (a) and (b), the determination result in step S11 is "yes". If one of the confirmation conditions (a) and (b) is abnormal, the determination result in step S11 is "no".

In step S11, if the system determines the mains does not normally operate, an emergency AC power supply is performed (step S14). For example, it is not limited to being powered by a configured uninterruptible power supply. In addition, in step S12, if the system determines that the batteries 14-1, 14-2, ..., 14-N are not in the normal charging mode, a peak shaving and valley filling is performed (step S15) so as to reduce the power supply pressure during peak hours of the mains V_{AC3}, and then perform the emergency AC power supply. Incidentally, the so-called "peak shaving" refers to a method used to regulate electric loads: During periods of peak power demand, power consumption is high, which may result in insufficient power supply or overloading of the grid. "Peak shaving" refers to reducing the power demand during peak periods by limiting the use of certain non-essential electrical equipment, or using a price mechanism to allow users to reduce electricity consumption, thereby alleviating the pressure on the power grid. In addition, during periods of low power demand, power consumption is low and electricity resources may be wasted. "Valley filling" refers to encouraging users to use electricity during low periods through incentives (such as lowering electricity prices) to increase power demand during this period, thereby increasing the utilization efficiency of electricity resources. Therefore, the allocation of power resources is optimized and the stable operation of the power system is ensured. Therefore, when the determination result in step S11 or in step S12 is "no", the emergency AC power supply is performed (step S14). Afterward, the system performs a battery power-off idle mode (step S16).

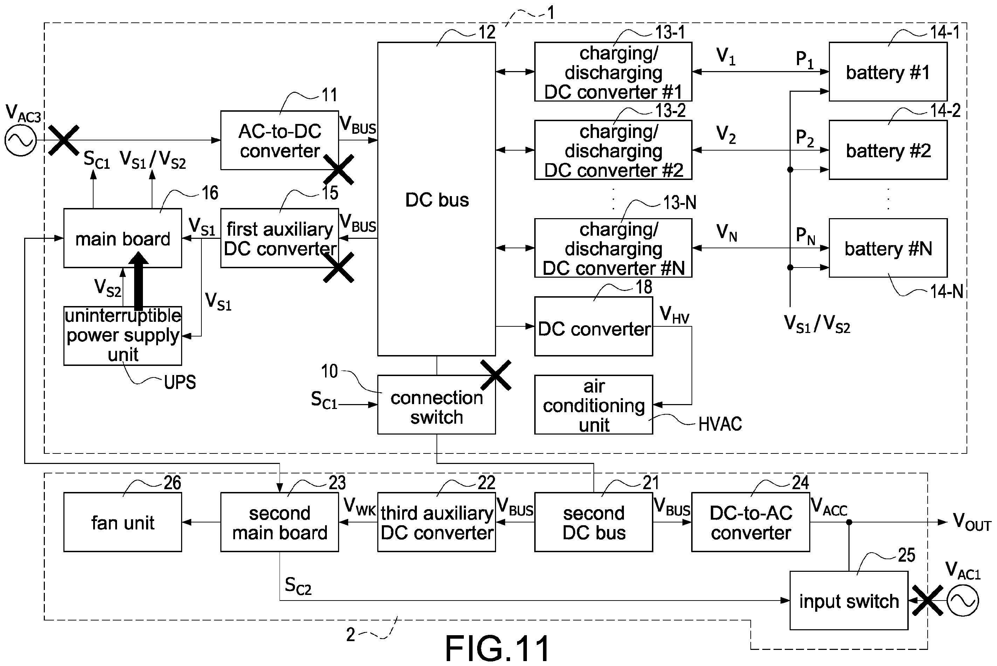

In the battery power-off idle mode, the uninterruptible power supply unit UPS temporarily provides the power required by the system to maintain the system normally operating. Regarding the battery power-off idle mode in step S16, please refer to FIG. 11, which shows a schematic diagram of operating the charging station system in a second power supply mode according to the present disclosure. When the mains V_{AC3} cannot normally supply power or the AC-to-DC 11 is abnormal, the DC bus 12 is unable to build the DC bus voltage V_{BUS}, and therefore the DC bus voltage V_{BUS} cannot be converted into the voltages V₁...V_{N} so that the batteries 14-1... 14-N cannot be charged and the batteries 14-1... 14-N are in the battery power-off idle mode.

Since the batteries 14-1... 14-N are in the battery power-off idle mode, the batteries 14-1... 14-N wait for confirmation to output (discharge) to the bidirectional charging/discharging DC converters 13-1, 13-2, ..., 13-N, and then provide the converted power to the DC bus 12. In this condition, the uninterruptible power supply unit UPS outputs the second state voltage V_{S2} to the main board 16 to maintain normal operation of the system, and the second state voltage V_{S2} is outputted from the main board 16 to the batteries 14-1, 14-2, ..., 14-N. In addition, in the battery power-off idle mode, the connection control signal Sci provided by the main board 16 turns off the connection switch 10 so that the battery swapping cabinet 1 and the AC discharging cabinet 2 are disconnected. Therefore, the single-phase AC power supply V_{AC1} cannot be used as the output voltage V_{OUT} of the AC discharging cabinet 2.

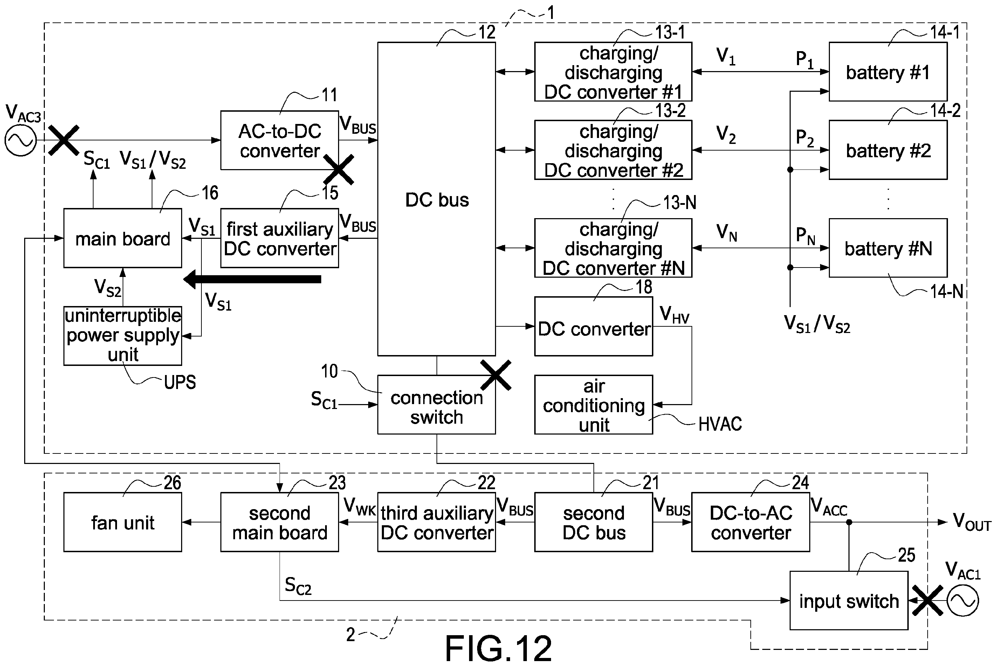

After the step S16, that is in the battery power-off idle mode and the uninterruptible power supply unit UPS temporarily provides the power required by the system, perform a battery power supply selection (step S17) to provide the power required by the system. As mentioned above, in the battery power-off idle mode, the batteries 14-1, 14-2, ..., 14-N wait for confirmation of which one can be selected to provide the power required by the system. Regarding the battery power supply selection in step S17, please refer to FIG. 12, which shows a schematic diagram of operating the charging station system in a third power supply mode according to the present disclosure.

In the battery power supply selection, the system selects one of the batteries 14-1... 14-N as the source of power. Therefore, the power outputted by the selected battery 14-1... 14-N is converted by the corresponding charging/discharging DC converters 13-1, 13-2, ..., 13-N, and the converted power is then provided to the DC bus 12. For example, if the first battery 14-1 is selected to provide power, the first charging/discharging DC converter 13-1 converts the power outputted (discharged) by the first battery 14-1 and provides the converted power to DC bus 12 as the DC bus voltage V_{BUS}. Therefore, the first auxiliary DC converter 15 receives the DC bus voltage V_{BUS}, and converts the DC bus voltage V_{BUS} into the first state voltage Vsi, and the first state voltage Vsi is provided to the main board 16 and the uninterruptible power supply unit UPS to maintain the power required for normal operation of the system.

After step S17, it is to determine whether the AC discharging cabinet is operated to discharge, and the batteries are in a discharged in a loanable state and battery lending mode (step S18). That is, it is determined whether the AC discharging cabinet can be operated in the discharge mode, and then the DC power provided by the batteries 14-1... 14-N is converted into AC power output for discharge, and whether the standby batteries 14-1... 14-N can be loaned out for use. Incidentally, for the battery lending operation, when the system is discharged, the battery lending logic is added. In particular, the judgment formula for selected battery lending, and the system operation will give priority to satisfying: (1) maintain the number of days that batteries 14-1... 14-N can power system mode; (2) at least n batteries 14-1... 14-N or more can be used as the battery lending mode; (3) at least n batteries 14-1... 14-N or more can be used as the discharging mode.

If the determination result in step S18 is "yes", the system selects the battery swapping cabinet 1 (step S19). In the battery swapping cabinet selection mode, the charging station system will decide one of the battery swapping cabinets as the discharging mode. Specifically, the system confirms that it has entered the battery swapping cabinet selection mode, and the system specifies the battery swapping cabinet for discharge, and then it completes the selection of the battery swapping cabinet for discharge and is ready to enter the discharging mode. Incidentally, in step S18, the confirmation conditions are: (a) maintain at least one battery swapping cabinet and more than two batteries 14-1... 14-N for a battery suppling power to system mode; (b) maintain at least one battery swapping cabinet and more than four batteries 14-1... 14-N for a discharging mode; (c) maintain at least one battery swapping cabinet and more than four batteries 14-1... 14-N for a battery lending mode. If the confirmation conditions (a) (b) (c) are all true, the determination result in step S18 is "the AC discharging cabinet can be discharged and the batteries are loanable". If the confirmation conditions (a) and (c) are true and the confirmation condition (b) is false, the determination result in step S18 is "the batteries are loanable". If the confirmation condition (a) is false, the determination result in step S18 is "the batteries can supply power to the supply". If the confirmation condition (c) is false, the determination result in step S18 is "the batteries can supply power to the supply".

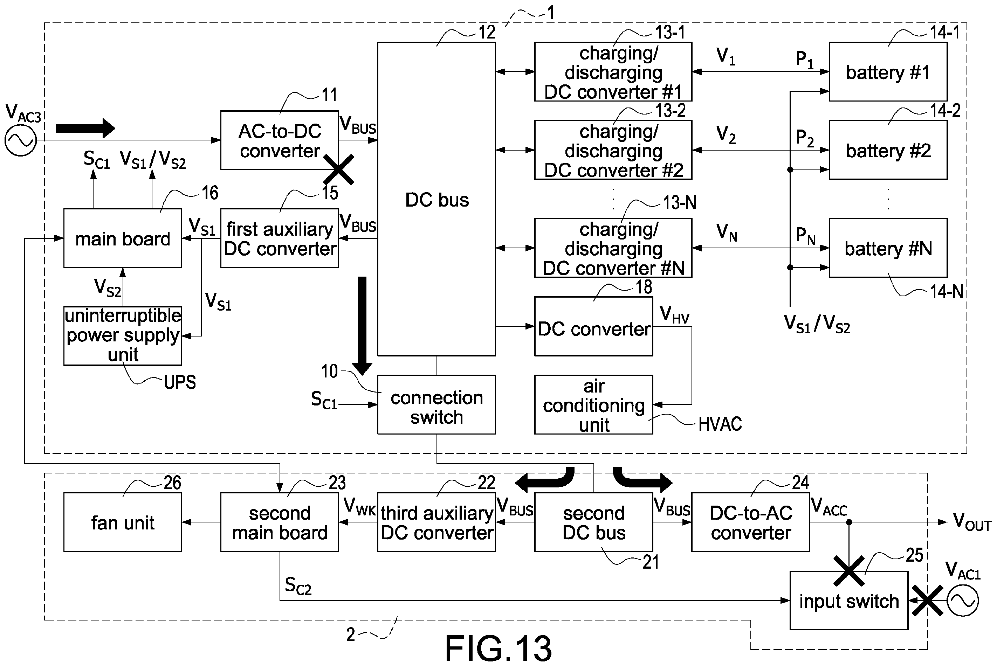

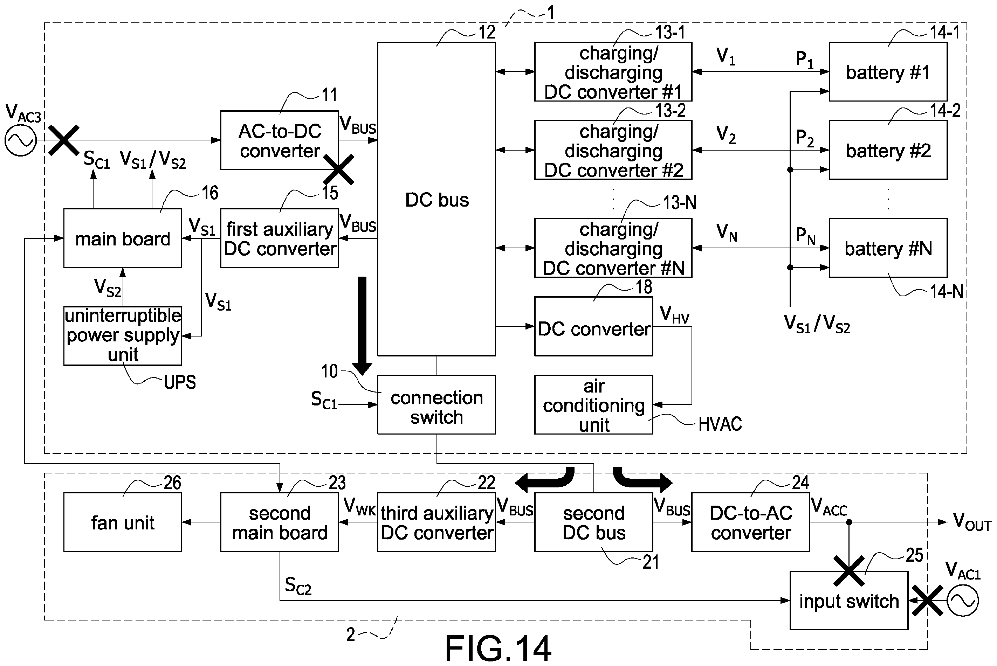

After step S19, the selected battery swapping cabinet supplies power to the AC discharging cabinet (step S20). Regarding suppling power to the AC discharging cabinet in step S19, please refer to FIG. 13, which shows a schematic diagram of operating the charging station system in a fourth power supply mode according to the present disclosure, or please refer to FIG. 14, which shows a schematic diagram of operating the charging station system in a fifth power supply mode according to the present disclosure.

As shown in FIG. 13, when the mains V_{AC3} normally operates, the system commands the batteries 14-1... 14-N to change to the discharging mode. Therefore, the batteries 14-1... 14-N provide the DC bus voltage V_{BUS} on the DC bus 12 through the bidirectional charging/discharging DC converters 13-1, 13-2, ..., 13-N. Moreover, the first auxiliary DC converter 15 converts the DC bus voltage V_{BUS} into the first state voltage Vsi to provide the power required for the operation of the main board 16 and the uninterruptible power supply unit UPS to maintain the normal operation of the system. In this condition, the mainboard 16 provides the connection control signal Sci to turn on the connection switch 10 so that the DC bus 12 of the battery swapping cabinet 1 is connected to the second DC bus 21 of the AC discharging cabinet 2. Therefore, the DC bus voltage V_{BUS} will be transmitted to the second DC bus 21 through the DC bus 12. In this condition, the control signal S_{C2} provided by the second main board 23 of the AC discharging cabinet 2 turns off the input switch 25 so as to disconnect the single-phase AC power supply V_{AC1} providing to the AC discharging cabinet 2. Eventually, the system will evaluate the higher-capacity batteries 14-1, 14-2, ..., 14-N to discharge to the DC-to-AC converter 24 (or an inverter) of the AC discharging cabinet 2, and convert the DC bus voltage V_{BUS} into the AC conversion voltage V_{ACC} to be as the output voltage V_{OUT} of the AC discharging cabinet 2.

As shown in FIG. 14, when the mains V_{AC3} cannot normally supply power or the AC-to-DC converter 11 is abnormal, the system commands the batteries 14-1... 14-N to change to the discharging mode. Therefore, the batteries 14-1... 14-N provide the DC bus voltage V_{BUS} on the DC bus 12 through the bidirectional charging/discharging DC converters 13-1, 13-2, ..., 13-N. Moreover, the first auxiliary DC converter 15 converts the DC bus voltage V_{BUS} into the first state voltage Vsi to provide the power required for the operation of the main board 16 and the uninterruptible power supply unit UPS to maintain the normal operation of the system. In this condition, the mainboard 16 provides the connection control signal Sci to turn on the connection switch 10 so that the DC bus 12 of the battery swapping cabinet 1 is connected to the second DC bus 21 of the AC discharging cabinet 2. Therefore, the DC bus voltage V_{BUS} will be transmitted to the second DC bus 21 through the DC bus 12. In this condition, the control signal S_{C2} provided by the second main board 23 of the AC discharging cabinet 2 turns off the input switch 25 so as to disconnect the single-phase AC power supply V_{AC1} providing to the AC discharging cabinet 2. Eventually, the system will evaluate the higher-capacity batteries 14-1, 14-2, ..., 14-N to discharge to the DC-to-AC converter 24 (or an inverter) of the AC discharging cabinet 2, and convert the DC bus voltage V_{BUS} into the AC conversion voltage V_{ACC} to be as the output voltage V_{OUT} of the AC discharging cabinet 2.

After step S20, return to step S18 to determine again whether the AC discharging cabinet is operated to discharge, and the batteries are in a discharged in a loanable state and battery lending mode. If the determination result in step S18 is "no", it means that the AC discharging cabinet 2 cannot continue to provide AC power supply, and therefore the system determines whether the mains V_{AC3} normally operates (step S21).

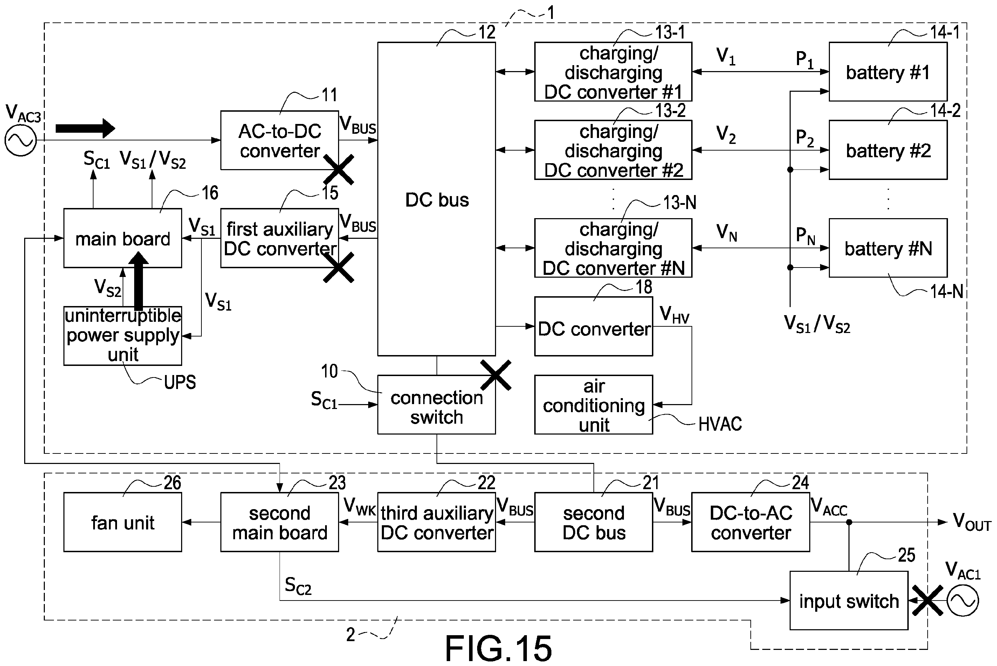

If the mains V_{AC3} normally operates, the system determines whether the batteries 14-1, 14-2, ..., 14-N are in a normal charging mode (step S22). If the batteries 14-1, 14-2, ..., 14-N are in the normal charging mode, the system performs a battery power-recovery idle mode (step S23). In the battery power-recovery idle mode, the uninterruptible power supply unit UPS temporarily provides the power required by the system to maintain the system normally operating. Regarding the battery power-recovery idle mode in step S23, please refer to FIG. 15, which shows a schematic diagram of operating the charging station system in a sixth power supply mode according to the present disclosure. When batteries 14-1, 14-2, ..., 14-N change from the discharging mode to the charging mode, the system needs to be changed to the battery power-recovery idle mode first. In this condition, the AC-to-DC converter 11 does not convert the mains V_{AC3} into the DC bus voltage V_{BUS} to the DC bus 12. Moreover, the DC-to-AC converter 24 of the AC discharging cabinet 2 first stops the single-phase AC power supply V_{AC1} providing to the AC discharging cabinet 2. Therefore, the connection control signal Sci provided by the main board 16 of the battery swapping cabinet 1 turns off the connection switch 10 so as to disconnect the second DC bus 21 and the DC bus 12. Since the batteries 14-1, 14-2, ..., 14-N are in the battery power-recovery idle mode, the uninterruptible power supply unit UPS provides the second state voltage V_{S2} to the main board 16 to maintain the normal operation of the system.

After step S23, the system normally operates to charge the batteries 14-1, 14-2, ..., 14-N (step S24). Regarding the battery charging in step S24, please refer to the operation of step S13 mentioned above, which will not be described again here. If the determination result in step S22 is "no", it means that the system determinates that the batteries 14-1, 14-2, ..., 14-N are not in the charging mode, and therefore the batteries 14-1, 14-2, ..., 14-N only maintain the system to operate, and then return to step S17 to perform the battery power supply selection, which will not be described again here. Similarly, if the determination result in step S21 is "no", it means that the system determinates that the mains V_{AC3} does not normally operate, the batteries 14-1, 14-2, ..., 14-N only maintain the system to operate, and then return to step S17 to perform the battery power supply selection, which will not be described again here.

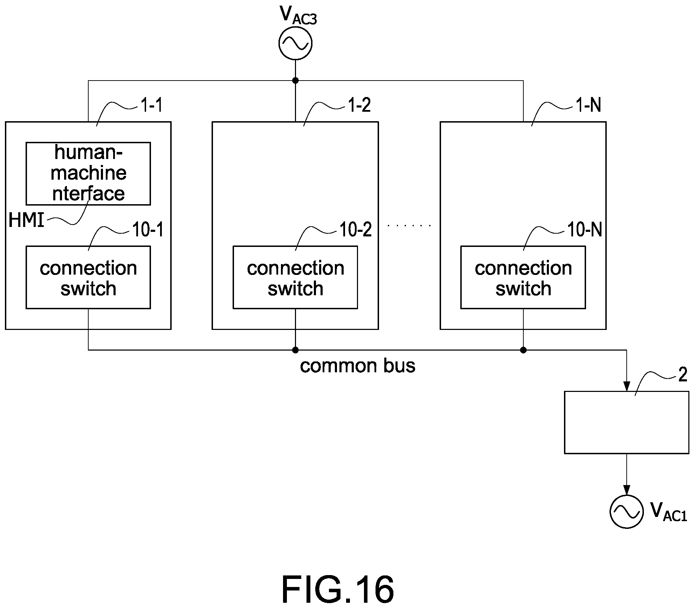

Please refer to FIG. 16, which shows a block diagram of the charging station system having a human-machine interface according to a first embodiment of the present disclosure. As shown in FIG. 16, the charging station system includes a plurality of battery swapping cabinets 1-1 to 1-N and an AC discharging cabinet 2. The plurality of battery swapping cabinets 1-1 to 1-N are connected to each other through a common bus, and the AC discharging cabinet 2 is connected to the plurality of battery swapping cabinets 1-1 to 1-N through the common bus. One of the pluralities of battery swapping cabinets 1-1 to 1-N supplies power to the AC discharging cabinet 2, and the power supply process of the battery swapping cabinets 1-1 to 1-N to the AC discharging cabinet 2 is switching without time difference. That is, it is assumed that the power supply is switched from the first battery swapping cabinet 1-1 to the Nth battery swapping cabinet 1-N to the AC discharging cabinet 2, then during the power supply switching, the AC discharge cabinet 2 can seamlessly connect from the first battery swapping cabinet 1-1 to the Nth battery swapping cabinet 1-N so as to maintain the normal operation of AC discharging cabinet 2. Incidentally, the principle of power supply switching may be: the battery swapping cabinet with the highest output voltage is used to supply power to the AC discharging cabinet, but this does not limit the present disclosure.

In addition, the charging station system further comprises a human-machine interface HMI. In particular, the human-machine interface HMI is provided inside one of the battery swapping cabinets (it is assumed to the first battery swapping cabinet 1-1 in this embodiment), and the first battery swapping cabinet 1-1 equipped with the human-machine interface HMI communicates with other battery swapping cabinet 1-2 to 1-N. Therefore, the user can use the graphical user interface (GUI), touch screen, voice control interface, and even virtual reality (VR) and augmented reality (AR) to interact with machines or systems more easily, intuitively and efficiently by operating the human-machine interface HMI equipped in the first battery swapping cabinet 1-1 so as to increase operating efficiency and user experience, and then operate the charging station system comprehensively and accurately.

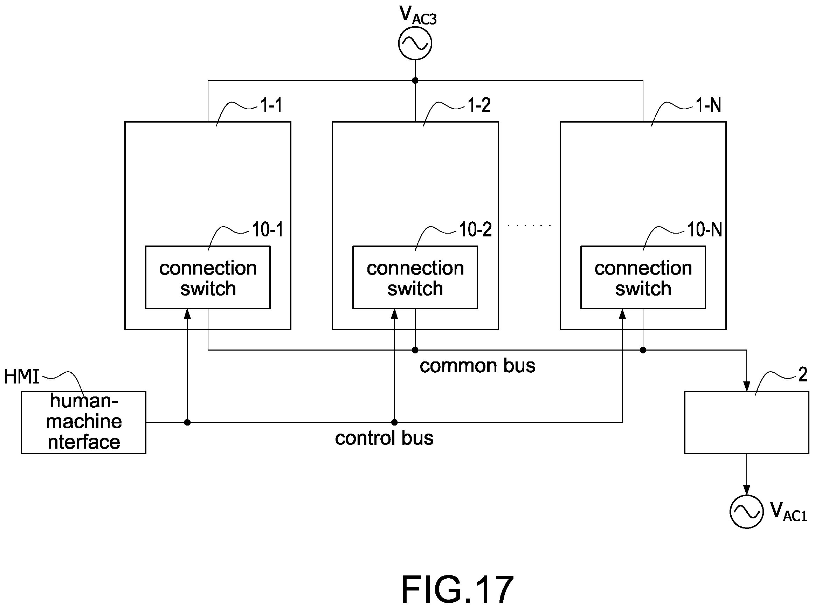

Moreover, please refer to FIG. 17, which shows a block diagram of the charging station system having the human-machine interface according to a second embodiment of the present disclosure. The difference from the embodiment shown in FIG. 17 is that the human-machine interface HMI shown in FIG. 17 is independently provided outside the battery swapping cabinets 1-1 to 1-N, and the human-machine interface HMI is respectively connected to the battery swapping cabinets 1-1 to 1-N through a control bus for communication. Therefore, the user can operate the human-machine interface HMI to operate the charging station system comprehensively and accurately.

## Claims

1. A battery swapping cabinet (1, 1A-1C), **characterized in that** the battery swapping cabinet (1, 1A-1C) comprising:
an AC-to-DC converter (11), configured to receive a three-phase AC power supply (V_{AC3}), and convert the three-phase AC power supply (V_{AC3}) into a DC bus voltage (V_{BUS}), wherein the DC bus voltage (V_{BUS}) is built on a DC bus (12),
a plurality of charging/discharging DC converters (13-1 to 13-N), configured to respectively receive the DC bus voltage (V_{BUS}), and convert the DC bus voltage (V_{BUS}) into a plurality of DC voltages (V1-V_{N}),
a plurality of batteries (14-1 to 14-N), correspondingly connected to the plurality of charging/discharging DC converters (13-1 to 13-N), and configured to receive the plurality of DC voltages (V1-V_{N}),
a first auxiliary DC converter (15), configured to receive the DC bus voltage (V_{BUS}), and convert the DC bus voltage (V_{BUS}) into a first state voltage (Vsi), and
a main board (16), configured to receive the first state voltage (Vsi) and a second state voltage (V_{S2}), wherein the first state voltage (Vsi) is greater than the second state voltage (V_{S2}),
wherein according to a state of the three-phase AC power supply (V_{AC3}), the main board (16) is configured to provide the first state voltage (Vsi) or the second state voltage (V_{S2}) to the plurality of batteries (14-1 to 14-N) to maintain the power required for uninterrupted operation of the plurality of batteries (14-1 to 14-N).

2. The battery swapping cabinet (1, 1A-1C) as claimed in claim 1, wherein the main board (16) internally comprises:
a switching contact (161), configured to receive the first state voltage (V_{S1}) and the second state voltage (V_{S2}),
wherein when the three-phase AC power supply (V_{AC3}) is disabled, the second state voltage (V_{S2}) is provided from the main board (16) to the plurality of batteries (14-1 to 14-N) through the switching contact (161) to maintain the power required for uninterrupted operation of the plurality of batteries (14-1 to 14-N); when the three-phase AC power supply (V_{AC3}) is enabled, the first state voltage (Vsi) is provided from the main board (16) to the plurality of batteries (14-1 to 14-N) through the switching contact (161) to maintain the power required for uninterrupted operation of the plurality of batteries (14-1 to 14-N).

3. The battery swapping cabinet (1, 1A-1C) as claimed in claim 1, further comprising:
a second auxiliary DC converter (17), coupled to the main board (16), and the second auxiliary DC converter (17) configured to receive one of the pluralities of DC voltages (V₁-V_{N}), and convert the DC voltage (V1-V_{N}) into the second state voltage (V_{S2}), and,
a plurality of diodes (19-1 to 19-N), each diode (19-1 to 19-N) comprising an anode and a cathode,
wherein the anodes of the plurality of diodes (19-1 to 19-N) are correspondingly connected to a plurality of charging/discharging paths (P₁-P_{N}) between the plurality of charging/discharging DC converters (13-1 to 13-N) and the plurality of batteries (14-1 to 14-N); the cathodes of the plurality of diodes (19-1 to 19-N) are jointly connected, and connected to the second auxiliary DC converter (17).

4. The battery swapping cabinet (1, 1A-1C) as claimed in claim 1, further comprising:
a DC converter (18), configured to receive the DC bus voltage (V_{BUS}), and convert the DC bus voltage (V_{BUS}) into a supplying voltage (V_{HV}), and
an air conditioning unit (HVAC), configured to receive the supplying voltage (V_{HV}), and the air conditioning unit (HVAC) being supplied power by the supplying voltage (V_{HV}) to provide heat dissipation for the plurality of batteries (14-1 to 14-N).

5. The battery swapping cabinet (1, 1A-1C) as claimed in claim 1, wherein any one of the plurality of batteries (14-1 to 14-N) is swapped out.

6. The battery swapping cabinet (1, 1A-1C) as claimed in claim 1, wherein any one of the pluralities of charging/discharging DC converters (13-1 to 13-N) is a bidirectional converter.

7. The battery swapping cabinet (1, 1A-1C) as claimed in claim 1, wherein the battery swapping cabinet (1, 1A-1C) provides an auxiliary power, and a voltage of the auxiliary power is between an upper limit voltage and a lower limit voltage,
wherein the first state voltage (Vsi) is not higher than the upper limit voltage, and the second state voltage (V_{S2}) is not lower than the lower limit voltage.

8. The battery swapping cabinet (1, 1A-1C) as claimed in claim 1, further comprising:
a plurality of diodes (19-1 to 19-N), each diode (19-1 to 19-N) comprising an anode and a cathode,
wherein the anodes of the plurality of diodes (19-1 to 19-N) are correspondingly connected to a plurality of charging/discharging paths (P₁-P_{N}) between the plurality of charging/discharging DC converters (13-1 to 13-N) and the plurality of batteries (14-1 to 14-N); the cathodes of the plurality of diodes (19-1 to 19-N) are jointly connected, and connected to the first auxiliary DC converter (15),
wherein the first auxiliary DC converter (15) is further configured to receive any one of the pluralities of DC voltages (V1-V_{N}), and convert the DC voltage (V1-V_{N}) into the second state voltage (V_{S2}),
wherein when the three-phase AC power supply (V_{AC3}) is disabled, the first auxiliary DC converter (15) is configured to provide the second state voltage (V_{S2}) so that the second state voltage (V_{S2}) is provided from the main board (16) to the plurality of batteries (14-1 to 14-N),
wherein when the three-phase AC power supply (V_{AC3}) is enabled, the first auxiliary DC converter (15) is configured to provide the first state voltage (Vsi) so that the first state voltage (Vsi) is provided from the main board (16) to the plurality of batteries (14-1 to 14-N).

9. The battery swapping cabinet (1, 1A-1C) as claimed in claim 1, further comprising:
an uninterruptible power supply unit (UPS), configured to generate the second state voltage (V_{S2}),
wherein when the three-phase AC power supply (V_{AC3}) is disabled, the uninterruptible power supply unit (UPS) is configured to provide the second state voltage (V_{S2}) so that the second state voltage (V_{S2}) is provided from the main board (16) to the plurality of batteries (14-1 to 14-N),
wherein when the three-phase AC power supply (V_{AC3}) is enabled, the first auxiliary DC converter (15) is configured to provide the first state voltage (Vsi) so that the first state voltage (Vsi) is provided from the main board (16) to the plurality of batteries (14-1 to 14-N),
wherein the uninterruptible power supply unit (UPS) is further configured to receive the first state voltage (Vsi), and the uninterruptible power supply unit (UPS) is supplied power by the first state voltage (V_{S1}).

10. An AC discharging cabinet (2), **characterized in that** the AC discharging cabinet (2) comprising:
a second DC bus (21), configured to provide a DC bus voltage (V_{BUS}),
a third auxiliary DC converter (22), configured to receive the DC bus voltage (V_{BUS}), and convert the DC bus voltage (V_{BUS}) into a working voltage (V_{WK}),
a second main board (23), configured to receive the working voltage (V_{WK}), and
a DC-to-AC converter (24), configured to receive the DC bus voltage (V_{BUS}), and convert the DC bus voltage (V_{BUS}) into an AC conversion voltage (V_{ACC}).

11. The AC discharging cabinet (2) as claimed in claim 10, further comprising:
an input switch (25), configured to receive a control signal (S_{C2}) provided by the second main board (23), and being controlled to be turned on and turned off by the control signal (S_{C2}).

12. The AC discharging cabinet (2) as claimed in claim 11, wherein the input switch (25) receives a single-phase AC power supply (V_{AC1}),
wherein when the AC conversion voltage (V_{ACC}) is used as an output voltage (V_{OUT}) of the AC discharging cabinet (2), the input switch (25) is turned off by the control signal (S_{C2}) provided by the second main board (23),
wherein when the AC conversion voltage (V_{ACC}) is not used as the output voltage (V_{OUT}) of the AC discharging cabinet (2), the input switch (25) is turned on by the control signal (S_{C2}) provided by the second main board (23) so that the single-phase AC power supply (V_{AC1}) is used as the output voltage (V_{OUT}) of the AC discharging cabinet (2).

13. A charging station system, **characterized in that** the charging station system comprising:
the battery swapping cabinet (1, 1A-1C) in one of claim 1 to claim 9, and
the AC discharging cabinet (2) in one of claim 10 to claim 12,
wherein the battery swapping cabinet (1, 1A-1C) further comprises a connection switch (10), and the connection switch (10) is connected between the DC bus (12) and the second DC bus (21),
wherein the main board (16) is configured to provide a connection control signal (Sci) to turn on and turn off the connection switch (10).

14. The charging station system as claimed in claim 13, wherein when the connection switch (10) is turned on, the DC bus voltage (V_{BUS}) on the DC bus (12) is provided to the second DC bus (21) through the connection switch (10) so that the AC conversion voltage (V_{ACC}) is used as an output voltage (V_{OUT}) of the AC discharging cabinet (2).

15. The charging station system as claimed in claim 13, wherein when the connection switch (10) is turned off, the DC bus voltage (V_{BUS}) on the DC bus (12) is not provided to the second DC bus (21) through the connection switch (10) so that a single-phase AC power supply (V_{AC1}) is used as an output voltage (V_{OUT}) of the AC discharging cabinet (2).
